# EUROPEAN PATENT APPLICATION

(11) **EP 4 564 162 A1**
(43) Date of publication of application: **04.06.2025**
(21) Application number: 24215635.4
(22) Date of filing: 27.11.2024
(51) Int. Cl.: G06F 9/4401, G06F 9/445, H04L 9/40

(54) **ADAPTIVE EOS**

(30) Priority: 28.11.2023 US 202363603383 P
(71) Applicant: Giesecke and Devrient Mobile Security America Inc., Dulles, Virginia 20166-8533 (US)
(72) Inventor: Borase, Hemant Udhavrao, Livermore, 94550 (US)
(74) Representative: LKGLOBAL Lorenz & Kopf Patentanwalt Attorney at Law PartG mbB

(57) **Abstract**

The present disclosure refers to a method of selecting an operating mode (34) of an operating system (24) of a data carrier (22), wherein said data carrier (22) is based on a secure element (23) and said operating system (24) is hosted by a single chip (26) of said data carrier (22), wherein said data carrier (22) is comprised by an electronic device (20) used for communication with at least one communication network (12; 14), said method comprising: transmitting a trigger signal (28) to the operating system (24) of the data carrier (22) via the electronic device (20); selection of an operating mode (34) of the operating system (24) corresponding to said trigger signal (28); operating the operating system (24) in the selected operating mode (34).

The present disclosure further refers to a corresponding system (10), computer program (24; 36), data carrier (22) and electronic device (20).

## Description

### Cross reference to related documents

The U.S. patent, published under the patent number US 8,042,117 B2, and further, the technical standard "GSMA SGP.02" (Official Document "SGP.02 - Remote Provisioning Architecture for Embedded UICC Technical Specification, Version 4.3, January 25, 2023", referred to herein as "GSMA SGP.02"), the technical standard "GSMA SGP.22" (Official Document "RSP Technical Specification, Version 3.0, October 19, 2022", referred to herein as "GSMA SGP.22"), and the technical standard "GSMA SGP.32" (Official Document "SGP.32 - eSIM IoT Technical Specification, Version 1.0.1, July 4, 2023", referred to herein as "GSMA SGP.32") published by the GSM Association (GSMA), and further, the technical standard "ETSI TS 102 221" (Official Document "ETSI TS 102 221, V18.1.0 (2023-09)", herein referred to as "ETSI TS 102 221") published by the European Telecommunications Standards Institute (ETSI), are incorporated herein as if fully set forth below.

### Technical Field

Generally, the present disclosure relates to methods of selecting operating modes of operating systems. More particularly, the present disclosure relates to a method of selecting an operating mode of an operating system comprised by an electronic device used for communication with a communication network. The present disclosure also relates to a corresponding system, electronic device, data carrier and computer program.

### Technical Background

In communication networks, a variety of devices are known that may run and switch between different operating systems.

For example, US 8,042,117 B2 refers to an operating system switching control device provided in a computer system. Said system comprises an operating system switching function of exclusively switching an operating system in an active status from one operating system to another operating system.

KR101780052B1 discloses a mobile phone, wherein a first operating system administrates switching of the operating system to a second operating system.

CN210222754U discloses a communication device with an Android operating system and a secure operating system. The first operating system connects to a cellular network, while the secure operating system is provided with an independent memory and processor.

CN104516782A discloses a mobile phone, capable of operating a first operating system as a native operating system and operating a second operating system as a virtual operating system simultaneously.

In known devices and methods, possibilities of switching operating systems widely depend on technical features of the respective device. Moreover, certain technical specifications of a device may be designed according to a particular technical standard, such as provided by GSMA or ETSI. Therefore, known devices are difficult to customize, particularly, if an established standard shall be switched. Accordingly, efficiency and flexibility of such methods and devices is limited.

### Summary

It may be seen as an object of the invention to improve efficiency and flexibility of devices used in communication networks and running different operating systems. A further objective may be seen as providing a possibility of customizing an operating system at low technical effort and high flexibility.

A method, a system, an electronic device, a data carrier and a computer program, according to the features of the independent claims, are provided. Further embodiments are evident from the dependent claims and from the present disclosure.

According to an aspect of the present disclosure, a method of selecting an operating mode of an operating system of a data carrier is provided. Said data carrier is based on a secure element and said operating system is hosted by a single chip of said data carrier. Said data carrier is comprised by an electronic device used for communication with at least one communication network. Said method comprises transmitting a trigger signal to the operating system of the data carrier via the electronic device. Further, said method comprises selection of an operating mode of the operating system corresponding to said trigger signal. Further, said method comprises operating the operating system in the selected operating mode.

The communication network may comprise any electronic communication network, such as a private network (PN), a non-private network (NPN), a satellite network (SN), a citizen's broadband radio service (CBRS), a public cellular network, a private cellular network, such as but not limited to CBRS and satellite networks or a public land mobile network (PLMN).

The data carrier, according to the present disclosure, is based on a secure element. The secure element may be a single chip and comprise the operating system. The entire data carrier may be implemented as a single chip forming a secure element and comprising the operating system. Secure elements as such are known in the art, for example, in the context of cell phones or smartcards. The data carrier may preferably be based on the functional principle of a universal integrated circuit card (UICC), or in other words, the data carrier may be UICC-based. This may but not necessarily has to imply implementation in the form of a card. The data carrier may be replaceable, embedded or integrated in the electronic device. In some embodiments, said data carrier may comprises a UICC, embedded UICC (eUICC), integrated UICC (iUICC), subscriber identity module (SIM), embedded SIM (eSIM) or integrated SIM (iSIM). Due to enhanced memory capacities and performance, the data carrier preferably comprises an embedded, integrated or even more advanced UICC architecture.

The term "hosted" in the context of the operating system of the present disclosure may mean that said operating system, which includes all data required to configure different operating modes, is stored on said single chip. The operating system may be loaded directly from said single chip and processed by a central processing unit (CPU) of the UICC for operation of the data carrier.

The electronic device may comprise an electronic communication interface, e.g. like a modem. The electronic device may be any mobile or static object with an electronic communication interface. For example, the electronic device may be a cell phone, a notebook, a desktop personal computer (PC), a tablet PC, a vehicle such as a car, truck, ship or plane or may be any machine, building, device or object comprising an electronic communication interface.

"Transmitting the trigger signal to the operating system" herein may refer to the trigger signal originally being sent by the communication network via the electronic device to the operating system. It may also refer to being sent to the operating system originally by the electronic device. The trigger signal may be transmitted directly to the operating system or indirectly, e.g. via an applet running on said operating system. The trigger signal may be pre-processed, e.g. simplified, by such an applet. For example, the applet may only pass on such information contained in the trigger signal to the operating system that are relevant for selection of a certain operating mode. The expression "transmitted or sent to the operating system" may refer to any of these possibilities. Said operating system and optional applet are commonly referred to as computer programs herein. Further, in the present disclosure, certain actions of the operating system or applet, such as sending, receiving, transmitting, processing, selecting, executing or operating may synonymously be referred to as actions of the data carrier.

Certain technical information explicitly or implicitly comprised by the trigger signal may be processed or analyzed to identify technical specifications or a technical standard used by the communication network or the electronic device. Based on this conclusion, an operating mode corresponding to the trigger signal, in other words to the used technical specification or standard, may be selected. Accordingly, the selected operating mode may correspond to different technical specifications or standards of certain communication networks and electronic devices capable of operating therein. For example, some communication networks may be designed for machine-to-machine communication (M2M), for consumer communication or for communication in the internet of things (IoT), all of the aforementioned defining different use cases, technical specifications and standards.

If the operating system is already operated in an initial or previous operating mode when the trigger signal is received, a different operating mode may be selected and operated. In this case, "selecting" may be understood as "switching". Generally, the method of the present disclosure, partwise or entirely, may be run in cycles or iterations.

The present disclosure enables for flexible adaption, customization or configuration of said operating system of said data carrier, efficiently and at low technical effort. Thus, various requirements can be met, exemplarily reflected by the above use cases. Due to the single chip, the data carrier and respective computer programs (operating system and optional applet) may be produced as standard components for a variety of methods, corresponding systems and electronic devices. This reduces production effort and logistics, improves scalability, forward-backward-compatibility and recycling and provides opportunities for technical standardization.

In some embodiments of the method of the present disclosure, selection of said operating mode may comprise provisioning of an operating profile of said data carrier.

While the selected operating mode may correspond to a certain technical specification of a communication network, said operating profile may correspond to a user of the electronic device or to a provider of the communication network. The data carrier may comprise one or more operating profiles corresponding to one or more users and/or providers.

In some embodiments of the method of the present disclosure, after selection of the operating mode and upon operation of the selected operating mode, a status message may be sent to the communication network. A status message may comprise "selection successful" or " selection not successful", for example.

Preferably, the single chip of the data carrier has a very high memory capacity. In some embodiments of the method of the present disclosure, the single chip may be a silicon chip. A silicon chip can hold large quantities of information and perform mathematical or logical operations.

In some embodiments of the method of the present disclosure, the operating system may be operated in a selected operating mode, designed according to one of the following standards: GSMA SGP.02; GSMA SGP.22; GSMA SGP.32. Therein, GSMA SGP.02 refers to M2M communication, GSMA SGP.22 refers to consumer communication and GSMA SGP.32 refers to IoT communication, as set forth in the respective official documents.

In some embodiments of the method of the present disclosure, the operating system is successively or alternatingly operated in a plurality of different selected operating modes. The operating system may be switched between one or more operating modes once or many times.

In some embodiments of the method of the present disclosure, the data carrier may perform at least one of the following actions, when selecting the operating mode: running a software protocol; executing a command.

Operating modes of the operating system of the data carrier corresponding to certain trigger signals may be specified in such a protocol. Such a protocol may react to certain trigger signals in specific ways to select an appropriate operating mode. Such a protocol may be implemented in the operating system, in an optional applet running on said operating system or may be integrated in both of said computer programs. Selection of an operating mode may also be triggered by a command comprised by said trigger signal. If an applet is used, said applet may extract the relevant information by preprocessing.

In some embodiments of the method of the present disclosure, the trigger signal is sent to the operating system by the electronic device and comprises a terminal capability command indicating an operating mode supported by the electronic device.

In some embodiments of the method of the present disclosure, the terminal capability command comprises additional information in the Tag-Length-Value-Format (TLV), indicating an operating mode supported by the electronic device. TLV is very suitable to describe technical features of an object, e.g. if the electronic device supports SGP.02, SGP.22 or SGP.32.

In some embodiments of the method of the present disclosure, the trigger signal may be sent to the operating system by the electronic device and may comprise a command according to the Application Protocol Data Unit (APDU), indicating the operating mode to be selected.

Such a command may be referred to as an APDU command. The APDU command serves as a communication unit between the data carrier and the electronic device. Specific APDU commands may be sent from the electronic device to the data carrier as the trigger signal to select/switch the operating mode of the operating system.

In some embodiments of the method of the present disclosure, the trigger signal is sent to the operating system by a server located remotely in the communication network and the data carrier is running a software protocol to process said trigger signal and to select an operating mode.

The term "remotely" or a remote server may be referred herein as an over-the-air (OTA) server. As mentioned further up, a status message may be sent to the server, that may be hosted by a provider of the communication network. Preferably, said status message is sent encrypted to the server.

According to another aspect of the present disclosure, a system is provided, comprising at least one communication network and an electronic device to communicate with said communication network. Said electronic device comprises a data carrier, based on a secure element, with an operating system of said data carrier being hosted by a single chip. Said system is designed and configurable for selecting an operating mode of the operating system of said data carrier by running a method according to the present disclosure.

The term "designed to" or "designed for" herein may refer to implementation of structural features (that may be hardware or software) required to potentially achieve an object's purpose, as set out by the present disclosure. The term "configured to" or "configured for" herein may refer to configuration of implemented structural features (that may be hardware or software) required to practically fulfill an object's purpose, as set out by the present disclosure.

According to another aspect of the present disclosure, a computer program is provided, designed and configurable to run or control a method according to the present disclosure.

In an embodiment, the computer program is an operating system of a data carrier of the present disclosure. In other embodiments, it may be an applet suitable to run on such an operating system or such an operating system and applet integrated with each other. The computer program may be referred to as adaptive, self-adapting or configurable regarding different operating modes. The computer program may also be referred to as a single-image computer program.

According to another aspect of the present disclosure, a data carrier is provided, comprising a computer program according to the present disclosure.

According to another aspect of the present disclosure, an electronic device is provided, designed and configurable to be used in a method according to the present disclosure.

### Brief description of the drawings

The present invention will hereinafter be described in conjunction with the following figures, wherein like numerals denote like elements, and wherein:
- Fig. 1: shows a system for selecting an operating mode of an operating system of a data carrier;
- Fig. 2: shows an electronic device with a data carrier and a computer program;
- Fig. 3: shows flow diagram of a method of selecting an operating mode of an operating system of a data carrier; and
- Fig. 4: shows a single chip of a data carrier.

### Detailed description of exemplary embodiments

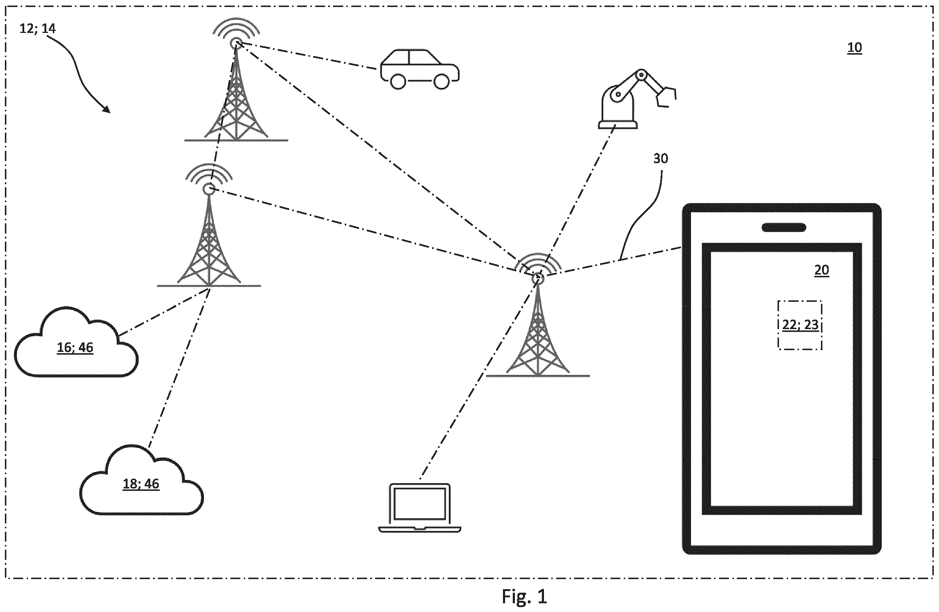

Figure 1 shows a system 10, comprising at least one communication network 12, 14 and an electronic device 20 to communicate with said communication network 12, 14. Said system 10 may be scalable and therefore system boundaries are indicated in an abstract manner by a dash-dot line. For example, the system 10 may be scaled by comprising a first communication network 12 that may be operated by a first communication network provider 16 and a second communication network 14 that may be operated by a second communication network provider 18. In some embodiments the system 10 may comprise additional electronic devices and/or communication networks.

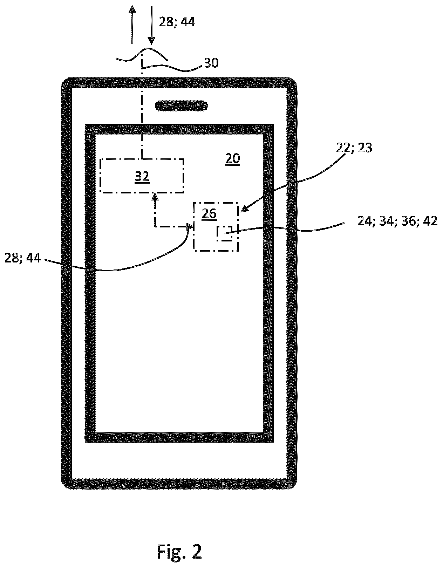

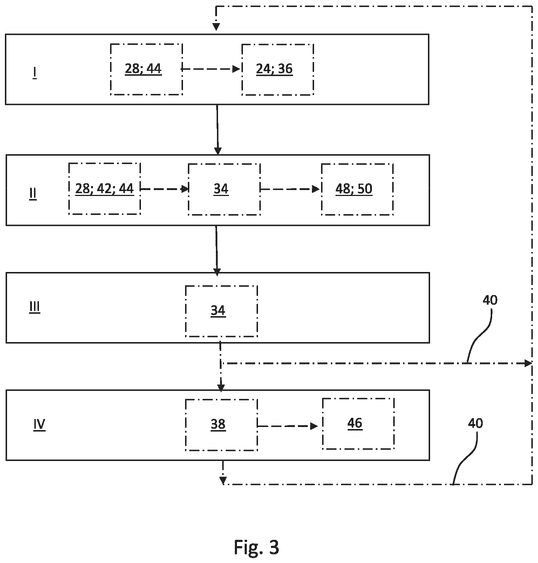

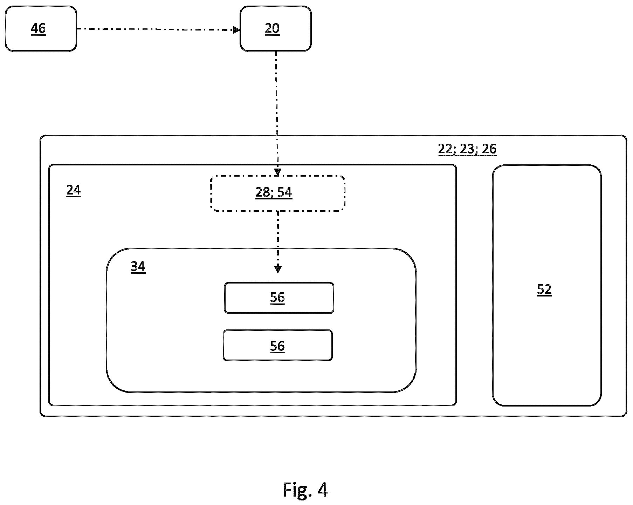

The electronic device 20 comprises a data carrier 22 based on a secure element 23. The data carrier 22 may be based on the functional principle of a UICC. The data carrier 22 may comprise an eUICC or iUICC, such as an eSIM or iSIM. Making additional reference to Figure 2, an operating system 24 of said data carrier 22 is hosted by a single chip 26 (also see Figure 4). Said system 10 is designed and configured for selecting an operating mode 34 of an operating system 24 of a data carrier 22 by running a method as described in further detail below and with additional reference to all figures, in particular Figure 3.

In step I of the method, a trigger signal 28 is transmitted to the operating system 24 of the data carrier 22 via the electronic device 20. Said trigger signal 28 may originally be sent from a communication network, for example from the first communication network 12 via a communication connection 30. Said trigger signal 28 may also originate from the electronic device 20 itself. In any case the trigger signal 28 is transmitted to the operating system 24 via the electronic device 20 that may comprise an electronic communication interface 32, e.g. comprising a modem. Said electronic communication interface 32 may be used for internal and external communication.

The trigger signal 28 corresponds to a certain operating mode 34, which is explained further down in more detail.

In a step II of the method, an operating mode 34 of the operating system 24 is selected, that corresponds to said trigger signal 28. Accordingly, the operating system 24 is operated in the selected operating mode 34 in a step III of the method.

To select an appropriate operating mode 34, certain technical information is used that is explicitly or implicitly comprised by the trigger signal 28. Such information may be processed or analyzed by the operating system 24 to identify technical specifications or a technical standard used by the original source of the trigger signal 28. An operating mode 34, compatible with a given technical specification or standard, is selected to (re-) configure and operate the operating system 24, accordingly. Such information may be present as a command in the trigger signal 28, demanding use of a certain operating mode. Such information may also be present by technical information in the trigger signal 28, enabling the operating system 24 to conclude, which operating mode may be compatible with the original source of the trigger signal 28 and shall be selected, accordingly. Such processing or analysis may be supported by an optional applet 36, that may run on the operating system 24 or may be integrated with the operating system 24 in some embodiments.

For example, the electronic device 20 may be the original source of the trigger signal 28 and may operate according to GSMA SGP.22, because the first communication network 12 may be a communication network according to GSMA SGP.22. At the same time, the operating system 24 of the data carrier 22 is generic/universal and may be designed to operate according to any of the following standards: GSMA SGP.02, GSMA SGP.22 or GSMA SGP.32. In this example, the trigger signal 28 is transmitted to the operating system 24 in step I of the method and comprises technical information that GSMA SGP.22 must be used or can be used. Based on that, operating system 24 may be configured by selecting an operating mode 34 that is designed according to GSMA SGP.22 in step II of the method. Accordingly, the operating system 24 is operated in the selected operating mode 34 compliant with GSMA SGP.22 in step III of the method in this example.

The method may comprise a step IV, wherein, after selection of the operating mode 34 and upon operation of the selected operating mode 34, a status message 38 may be sent to the communication network, in this example to the first communication network 12. Thus, the operating system 24 may let the first communication network 12 know that the electronic device 20 is ready to work in a GSMA SGP.22 network.

The operating system 24 may be successively or alternatingly operated in a plurality of different selected operating modes 34, as indicated by iterations 40 in Figure 3.

Additional refence is made to US 8,042,117 B2, wherein further examples of switching an operating system can be gained, particularly from column 2, line 62 to column 3, line 18. Enabled by the present disclosure, the technical means and methods found in US 8,042,117 B2 may be implemented on a single chip of a data carrier.

The data carrier 22 may run a software protocol 42 when selecting the operating mode 34 in step II of the method. Said protocol 42 may comprise specific algorithms, that are executed to react to a specific trigger signal 28 provided in step I. The data carrier 22 may also execute a command 44 provided by the trigger signal 28 in step I to select the operating mode 34 in step II of the method.

For example, the trigger signal 28 may be sent to the operating system 24 in step I by the electronic device 20 and may comprises a terminal capability command as command 44. The terminal capability command may indicate the operating mode 34 supported by the electronic device 20, e.g. compliant with GSMA SGP.02, GSMA SGP.22 or GSMA SGP.32, that may or must be selected in step II. (Embodiment 1 as in IDF) The use of terminal capability commands can be gained in more detail from the official document of "ETSI TS 102 221", particularly from sections 6.2.1, 7.4.3, 11.1.1.4.6.8, 11.1.17.1, 11.1.19.2.1, 11.1.19.2.2, 11.1.19.2.3, 11.1.19.2.4, 11.1.22.3.2 or 14.5.5.

The terminal capability command sent in step I may comprise information in the TLV (Tag Length Value) format, indicating an operating mode supported by the electronic device 20. TLV format is particularly beneficial in the context of a secure element, that may be based on the functional principle of a UICC, because TLV saves storage space on such secure elements or UICC based data carriers. Such a TLV command may be of the format "84 01 XX" (values are just examples). "84" is a tag that may, in this example, identify that a new technical specification is supported. "01" represents a length and indicates how many bytes the command may have. In this example a length of the command data is 1 byte ("02" would represent 2 bytes). "XX" may be a command parameter, e.g. "01" may indicate compatibility with GSMA SGP.22, "02" indicating compatibility with GSMA SGP.02 and "03" indicating compatibility with GSMA SGP.32. Based on the parameter "XX", the operating mode 34 may be selected in step II.

The trigger signal 28 may be sent to the operating system 24 by the electronic device 20 in step I and may comprise a command 44 according to APDU (which is a data format used by smartcards), indicating the operating mode 34 to be selected in step II. The APDU command 44 may have the format "80 E2 XX YY LL ZZ" (values are just examples), wherein XX = P1, YY = P2, LL = Length, ZZ = Payload. Such a smart card APDU format is well known and specified by ISO 7816-4 as "CLA (class byte) INS (instruction byte) P1 P2 P3 (parameters 1-3) (L3=length)" and per GP Class byte CLA =80 and INS =E2 (which means a store data command). Parameters P1 and P2 can be defined by the developer of the operating system. The terminal/electronic device may be able to send a custom APDU to the operating system or applet to switch the operating mode of the operating system when needed.

The trigger signal 28 may also be sent to the operating system 24 from a server 46 in step I that may be located remotely in the communication network (such as an OTA), e.g. located at a site of first communication network provider 16 who may operate the first communication network 12. Then, the data carrier 22 may run a software protocol 42 to process said trigger signal 28 and select an operating mode 34 in step II.

Upon selection of an operating mode 34 in step II, the method may comprise provisioning of an operating profile of said data carrier 22, e.g. an eSIM or iSIM profile. For example, a first operating profile 48 may be provisioned corresponding to the first communication network provider 16, if the operating system 24 is configured in an operating mode 34 compatible with the first communication network 12. Likewise, a second operating profile 50 may be provisioned corresponding to the second communication network provider 18, if the operating system 24 is configured in an operating mode 34 compatible with the second communication network 14.

If the operating mode 34 is switched, for example to connect the electronic device 20 to an IoT network instead of a consumer network, the data carrier 22 may reset all (consumer) user memory, which may include wiping all installed eSIMs during such a switch. Then, an IoT eSIM may be provisioned. If, for example, the operating mode 34 is switched to connect the electronic device 20 from one consumer network to a different consumer network, the data carrier 22 may save and use the same or other existing eSIM credentials.

Fig. 4 shows a single chip 26 of a data carrier 22 of an electronic device 20 (as in Figs. 1 and 2). Said single chip 26 may be a silicon chip. The data carrier 22 is based on a secure element 23. Preferably, and described in this example, the data carrier 22 is based on the functional principle of a UICC or eUICC (for the sake of simplicity the term UICC is used in the following). Even more preferred, the data carrier 22 is embodied as the single chip 26. This means, the data carrier 22 - the single chip 26 respectively - is a secure element 23 and comprises the operating system 24 in this example.

The operating system 24 itself may comprises configurable software modules 56 stored therein, that are suitable to select a certain operating mode 34 (e.g. for SGP.22), if selected for the operating system 24. The single chip 26 may also comprise a boot loader 52 to hold keys and certificates to operate according to a certain operating mode 34.

Change of the operating mode 34 of the operating system 24 may be done, if the electronic device 20 communicates to the operating system 24, for example via an issuer security domain-route (ISD-R) 54 (see for example GSMA SGP.22, page 33, section 2.4.3), a dedicated application identifier (AID - see for example GSMA SGP.22, page 17) as a trigger signal 28 that says, the electronic device 20 would like to choose a certain operating mode 34.

Accordingly, selection of an operating mode 34 of the operating system 24, corresponding to said trigger signal 28, can be done by loading a corresponding software module 56. Then, the operating system 24 can be operated in the selected operating mode 34.

It is also possible, that a remote server 46 (compare Fig. 1) can tell the electronic device 20 to switch the operating mode 34 of the operating system 24, e.g. as described above. The remote server 46 can remotely update the UICC with new components, e.g. software modules 56, via the electronic device 20, replacing or completing for example the selectable operating modes 34 stored in the operating system 24, e.g. for future standards. The boot loader 52 may be updated when the operating system 24 is switched to another operating mode 34. Like the operating system 24, the boot loader 52 may also be updated with new keys and certificates to operate according to updated operating mode 34.

### Reference numerals

- 10: system
- 12: first communication network
- 14: second communication network
- 16: first communication network provider
- 18: second communication network provider
- 20: electronic device
- 22: data carrier
- 23: secure element
- 24: operating system
- 26: single chip
- 28: trigger signal
- 30: communication connection
- 32: electronic communication interface
- 34: operating mode
- 36: applet
- 38: status message
- 40: iteration
- 42: software protocol
- 44: command
- 46: server
- 48: first operating profile
- 50: second operating profile
- 52: boot loader
- 54: issuer security domain-route
- 56: software module

## Claims

1. Method of selecting an operating mode (34) of an operating system (24) of a data carrier (22), wherein said data carrier (22) is based on a secure element (23) and said operating system (24) is hosted by a single chip (26) of said data carrier (22), wherein said data carrier (22) is comprised by an electronic device (20) used for communication with at least one communication network (12; 14), said method comprising:
- transmitting a trigger signal (28) to the operating system (24) of the data carrier (22) via the electronic device (20);
- selection of an operating mode (34) of the operating system (24) corresponding to said trigger signal (28);
- operating the operating system (24) in the selected operating mode (34).

2. Method according to claim 1, wherein said data carrier (22) is based on the functional principle of a universal integrated circuit card (UICC).

3. Method according to any of the preceding claims, wherein selection of said operating mode (34) comprises provisioning of an operating profile (48; 50) of said data carrier (22).

4. Method according to any of the preceding claims, wherein, after selection of the operating mode (34) and upon operation of the selected operating mode (34), a status message (38) is sent to the communication network (12; 14).

5. Method according to any of the preceding claims, wherein the operating system (24) is operated in a selected operating mode (34), designed according to one of the following standards: GSMA SGP.02; GSMA SGP.22; GSMA SGP.32.

6. Method according to any of the preceding claims, wherein the operating system (24) is successively or alternatingly operated in a plurality of different selected operating modes (34).

7. Method according to any of the preceding claims, wherein the data carrier (22) performs at least one of the following actions, when selecting the operating mode (34): running a software protocol (42); executing a command (44).

8. Method according to claim 7, wherein the trigger signal (28) is sent to the operating system (24) by the electronic device (20) and comprises a terminal capability command indicating an operating mode (34) supported by the electronic device (20).

9. Method according to claim 8, wherein the terminal capability command comprises additional information in the Tag-Length-Value-Format (TLV), indicating an operating mode (34) supported by the electronic device (20).

10. Method according to claim 7, wherein the trigger signal (28) is sent to the operating system (24) by the electronic device (20) and comprises a command (44) according to the Application Protocol Data Unit (APDU), indicating the operating mode (34) to be selected.

11. Method according to claim 7, wherein the trigger signal (28) is sent to the operating system (24) by a server (46) located remotely in the communication network (12; 14) and the data carrier (22) is running a software protocol (42) to process said trigger signal (28) and to select an operating mode (34).

12. System (10), comprising at least one communication network (12; 14) and an electronic device (20) to communicate with said communication network (12; 14), wherein the electronic device (20) comprises a data carrier (22) based on a secure element (23) with an operating system (24) of said data carrier (22) being hosted by a single chip (26), wherein said system (10) is designed and configurable for selecting an operating mode (34) of the operating system (24) of said data carrier (22) by running a method according to any of the claims 1 to 11.

13. Computer program (24; 36), designed and configurable to run or control a method according to any of the claims 1 to 11.

14. Data carrier (22), comprising a computer program (24; 36) according to claim 13.

15. Electronic device (20), designed and configurable to be used in a method according to any of the claims 1 to 11.
